# EUROPÄISCHE PATENTANMELDUNG

(11) **EP 1 398 329 A1**
(43) Veröffentlichungstag der Anmeldung: **17.03.2004**
(21) Anmeldenummer: 03019576.2
(22) Anmeldetag: 03.09.2003
(51) Int. Cl.: C08C 19/44, C08L 15/00

(54) **Hochverzweigte Dien-Polymere**

(30) Priorität: 16.09.2002 DE 10242942
(71) Anmelder: Bayer Aktiengesellschaft, 51368 Leverkusen (DE)
(72) Erfinder: Grün, Michael, Dr., 53721 Siegburg (DE); Mücke, Silvia, Dr., 51377 Leverkusen (DE); Wrana, Claus, Dr., 51061 Köln (DE)

(57) **Zusammenfassung**

Die vorliegende Erfindung betrifft hochverzweigte und gekoppelte Polymere auf Basis von konjugierten Dienen oder von konjugierten Dienen und vinylaromatischen Verbindungen sowie von polyfunktionellen, organischen Verbindungen mit mindestens vier zur Kopplung fähigen Gruppen. Aus den erfindungsgemäßen hochverzweigten Dien-Polymere lassen sich Vulkanisate bzw. Kautschukformkörpern aller Art herstellen, insbesondere Reifen, die einen verbesserten Rollwiderstand aufweisen.

## Beschreibung

Die vorliegende Erfindung betrifft hochverzweigte und gekoppelte Dien-Polymere, ein Verfahren zu ihrer Herstellung sowie ihre Verwendung.

Es ist bekannt, insbesondere für den Einsatz im Reifenbau, lebende, bevorzugt lebende alkali-terminierte Polymere, auf Basis von konjugierten Dienen oder auf Basis von konjugierten Dienen und vinylaromatischen Verbindungen mit besonders dafür geeigneten organischen oder anorganischen Verbindungen zu verknüpfen (koppeln), wobei insbesondere die Verarbeitungseigenschaften sowie die physikalischen und dynamischen Eigenschaften, bevorzugt solche, die im Zusammenhang mit dem Rollwiderstand bei Reifen stehen, verbessert werden.

In diesem Zusammenhang sei insbesondere auf WO 01/23467 A1 und JP 7 330 959 A2 hingewiesen, in denen Kautschukmischungen für die Herstellung von Reifenlaufflächen beschrieben werden, die u.a. Dien-Kautschuke beinhalten, welche mit polyfunktionellen Verbindungen, die zwei oder mehr Epoxidgruppen enthalten, gekoppelt wurden. Obwohl gemäß den beiden genannten Patentveröffentlichungen mit Hilfe der dort vorgestellten Kautschukmischungen die physikalischen Eigenschaften, insbesondere der Rollwiderstand, bei den hergestellten Reifen verbessert werden, hat sich jedoch gezeigt, dass es möglich ist, mit speziellen gekoppelten und modifizierten Polymeren auf Basis von konjugierten Dienen oder konjugierten Dienen und vinylaromatischen Verbindungen die physikalischen Eigenschaften und die Verarbeitungseigenschaften der in den beiden Patentveröffentlichungen beschriebenen Kautschukmischungen noch zu verbessern. Wir verweisen in diesem Zusammenhang auf unsere deutsche Patentanmeldung Nr. 10 217 800.3 und die dort beschriebenen gekoppelten Dien-Polymere.

Es wurde nun gefunden, dass die in der genannten deutschen Patentanmeldung vorgestellten gekoppelten und modifizierten Dien-Polymere in ihren physikalischen Eigenschaften, insbesondere hinsichtlich des Rollwiderstands, noch verbessert werden können, wenn man die nachstehend näher beschriebenen hochverzweigten und gekoppelten Dien-Polymere für die Herstellung von Reifen, bevorzugt für die Herstellung von Reifenlaufflächen, verwendet.

Gegenstand der vorliegenden Erfindung sind daher verzweigte und gekoppelte Polymere auf Basis von konjugierten Dienen oder von konjugierten Dienen und vinylaromatischen Verbindungen sowie von polyfunktionellen, organischen Verbindungen mit mindestens 4 zur Kopplung fähigen Gruppen, wobei die Polymeren ein Molekulargewichtsverhältnis (M_{w}/Mₙ) von 1,0 bis 3,0, ein Gewichtsmittel des Molekulargewichts (M_{w}) von 400 000 bis 2 000 000, eine Glasübergangstemperatur (T_{g}) von -50 bis -10°C, eine Menge an 1,2-Vinylgruppen von 40 bis 80 %, bezogen auf die im Polymeren vorhandenen Dien-Einheiten, einen Kopplungsgrad von mindestens 45 % aufweisen, wobei mindestens 60 % der gekoppelten Polymere einen Verzweigungsgrad größer zwei haben, mit der Maßgabe, dass die Gewichtsmenge an Polymeren mit 4 und mehr als 4-facher Verzweigung, bezogen auf 100 g Polymer, stets größer ist als die Gewichtsmenge an Polymeren mit 3-facher Verzweigung, und wobei die Differenz der Lösungsviskosität vor und nach der Kopplung bei den Polymeren im Bereich von 100 bis 400 (gemessen mit einer Lösung von 0,5 g Polymer in 100 ml Toluol, bestimmt bei 25°C mit einem Ubblelohde-Viskosimeter) liegt.

Bevorzugt sind solche verzweigte und gekoppelte Polymere, die dadurch gekennzeichnet sind, dass das Molekulargewichtsverhältnis (M_{w}/Mₙ) 1,5 bis 2,8, das Gewichtsverhältnis des Molekulargewichts (M_{w}) 600 000 bis 1 400 000, die Glasübergangstemperatur (T_{G}) -40 bis -15°C, die Menge an 1,2-Vinylgruppen 50 bis 70 % und der Kopplungsgrad 48 bis 80 % beträgt, darüberhinaus 70 bis 95 % der gekoppelten Polymere einen Verzweigungsgrad größer als zwei haben, die Differenz der Lösungsviskosität vor und nach der Kopplung 140 bis 300 beträgt und die Gewichtsmenge an Polymeren mit 4- und mehr als 4-facher Verzweigung um 10-50 %, besonders bevorzugt 15-45 %, größer ist als die Menge an Polymeren mit 3-facher Verzweigung.

Der oben erwähnte Kopplungsgrad definiert sich als die Mengen an Polymeren, die mit den eingesetzten Kopplungsmitteln reagiert haben, bezogen auf 100 g der gesamten vorhandenen Menge an Polymeren.

Der angegebene Verzweigungsgrad definiert sich als die Gewichtsmenge an Polymeren mit 3- und mehr als 3facher Verzweigung, bezogen auf 100 g der Gesamtmenge an vorhandenem Polymer.

Die Herstellung der erfindungsgemäßen Polymere erfolgt in üblicher Weise durch Umsetzung von lebenden anionischen Polymeren, die üblicherweise durch entsprechende Alkali-Metalle terminiert sind, mit den erfindungsgemäß eingesetzten organischen, polyfunktionellen Verbindungen. Die anionische Polymerisation von ungesättigten Verbindungen ist ein weitverbreitetes Verfahren, beispielsweise zur Herstellung von entsprechenden Elastomeren und natürlich dem Fachmann geläufig. Solche anionischen Polymerisationsreaktionen mit entsprechendem theoretischem Hintergrund sind u.a. näher beschrieben in Polymer Synthesis (Paul Rempp und Erdward W. Merill) Huethig und Wepf-Verlag, Basel, Heidelberg, New York, 1986, Seite 114 bis Seite 138 sowie in Science and Technology of Rubber, second edition, (edited by: Shane E. Mark, Burak Erman und Frederick R. Eirich) Academic Press, 1994, Seite 60 bis 70. Darüber hinaus wird auf DE 198 57 768 A1 verwiesen, wo die Kopplung von lebenden Alkalimetall-terminierten Polymeren mit einem Epoxidgruppen enthaltenden Verknüpfungsmittel beschrieben wird.

Als konjugierte Diene zum Aufbau der lebenden anionischen Polymeren können alle bekannten Diene eingesetzt werden, die für die Herstellung entsprechender Polymeranionen üblich sind. Beispielsweise sind zu nennen: 1,3-Butadien, 2,3-Dimethyl-1,3-butadien, 3-Butyl-1,3-octadien, Isopren, Piperylen, 1,3-Hexadien, 1,3-Octadien, 2-Phenyl-1,3-butadien, bevorzugt 1,3-Butadien und Isopren, sowie Mischungen derselben.

Als vinylaromatische Verbindungen kommen ebenfalls die bekannten vinylaromatischen Verbindungen in Betracht, die zusammen mit den konjugierten Dienen copolymerisiert werden können. Zu nennen sind beispielsweise Styrol, p-Methylstyrol, α-Methylstyrol, 3,5-Dimethylstyrol, Vinylnaphthalin, p-tert.-Butylstyrol, Divinylstyrol, Divinylethylen, 4-Propylstyrol, p-Tolylstyrol, 1-Vinyl-5-hexylnaphthalin, 1-Vinylnaphthalin, bevorzugt Styrol, oder Mischungen derselben.

Bei der Copolymerisation der genannten konjugierten Diene mit den vinylaromatischen Verbindungen beträgt die Menge an eingesetzten vinylaromatischen Verbindungen üblicherweise 5 bis 55 Gew.-%, bevorzugt 10 bis 45 Gew.-%, und die Menge an eingesetzten konjugierten Dienen entsprechend 45 bis 95 Gew.-%, bevorzugt 55 bis 90 Gew.-%. Bei den Copolymeren kann es sich um ein statistisches, Stufenblockoder vollständiges Blockcopolymer der verschiedenen, genannten Monomeren handeln.

Die lebenden anionischen Polymeren auf Basis der genannten Monomeren sind - wie erwähnt - durch Alkalimetalle terminiert und werden in dieser Form zur Umsetzung in situ mit den erfindungsgemäßen funktionellen organischen Verbindungen eingesetzt.

Als terminierendes Alkalimetall kommen die Alkalimetalle Lithium, Natrium, Kalium, Rubidium und Cäsium, vorzugsweise Lithium, in Betracht.

Als organische, polyfunktionelle Verbindungen, die mindestens 4 zur Kopplung fähige Gruppen besitzen, werden insbesondere solche organische Verbindungen eingesetzt, die beispielsweise Epoxidgruppen, Isocyanatgruppen, Aldehydgruppen, Estergruppen, Säurechloridgruppen, Alkoxysiloxangruppen, sowie Silicium- und Zinnhalogenidgruppen enthalten. Bevorzugt sind Epoxidgruppen, Estergruppen, Silicium- und Zinnhalogenidgruppen, 'ganz besonders bevorzugt sind Epoxidgruppen.

Beim Einsatz solcher polyfunktioneller Verbindungen und Umsetzung dieser Verbindungen mit den intermediär gebildeten Polymeranionen (Kopplungsreaktionen) werden auch elektrophile Gruppen, beispielsweise Hydroxygruppen, gebildet (Reaktion der Polymeranionen mit Epoxidgruppen-enthaltenden Verbindungen).

Die erfindungsgemäß hergestellten verzweigten und gekoppelten Dienpolymere enthalten etwa 10 bis 35 Gew.-%, bezogen auf das Molgewicht des Kopplungsmittels, bevorzugt 12 bis 30 Gew.-%, an solchen bei der Kopplungsreaktion gebildeten elektrophilen Gruppen.

Besonders bevorzugt werden polyfunktionelle organische Verbindungen eingesetzt, die 4 bis 16, insbesondere 4 bis 6, ganz besonders bevorzugt 4 Gruppen besitzen, die mit den lebenden anionischen Polymere zur Reaktion fähig sind.

Als solche funktionelle organische Verbindungen werden genannt: polyfunktionelle Methoxysiloxane, polyfunktionelle Ethoxysiloxane, 4,4-Methylen-bis-(N,N-diglycidylanilin) bevorzugt polyfunktionelle Ethoxysiloxane, 4,4-Methylen-bis-(N,N-diglycidylanilin), besonders bevorzugt 4,4-Methylen-bis-(N,N-diglycidylanilin). Selbstverständlich können die zur Kopplung fähigen polyfunktionellen organischen Verbindungen auch im beliebigen Gemisch untereinander eingesetzt werden.

Zur Herstellung der erfindungsgemäßen verzweigten und gekoppelten Polymere wird die Umsetzung der lebenden anionischen Polymere mit den erfindungsgemäßen funktionellen organischen Verbindungen üblicherweise in Gegenwart von inerten, aprotischen Lösungsmitteln durchgeführt.

Solche inerte aprotische Lösungsmittel können paraffinische Kohlenwasserstoffe sein, wie isomere Pentane, Hexane, Heptane, Octane, Decane, 2,4-Trimethylpentan, Cyclopentan, Cyclohexan, Methylcyclohexan, Ethylcyclohexan oder 1,4-Dimethylcyclohexan, oder aromatische Kohlenwasserstoffe, wie Benzol, Toluol, Ethylbenzol, Xylol, Diethylbenzol oder Propylbenzol. Diese Lösungsmittel können einzeln oder in Kombination verwendet werden. Bevorzugt sind Cyclohexan und n-Hexan.

Gegebenenfalls kann den genannten aprotischen Lösungsmitteln bei der Copolymerisation von vinylaromatischen Verbindungen mit den konjugierten Dienen zur Steigerung der Polymerisationsgeschwindigkeit und/oder zur Modifizierung der Polymerstrukturen ein polares Lösungsmittel zugesetzt werden. Zu den geeigneten polaren Lösungsmitteln gehören Ether, wie Tetrahydrofuran, Diethylether, Cycloamylether, Dipropylether, Ethylendimethylether, Ethylendiethylether, Diethylenglykol, Dimethylether, tert.-Butoxyethoxyethan, Bis-(2-dimethylaminoethyl)ether oder (Dimethylaminoethyl)-ethyl-ether vorzugsweise tert.-Butoxyethoxyethan, Bis-(2-dimethylaminoethyl)ether oder (Dimethylaminoethyl)-ethyl-ether, sowie tertiäre Amine, wie Trimethylamin, Triethylamin, Tripropylamin oder Tetramethylethylendiamin, vorzugsweise Triethylamin oder Tetramethylethylendiamin. Mit der Zugabe von polaren Lösungsmitteln kann zudem - wie erwähnt - die Mikrostruktur der entsprechenden Copolymerisate geändert werden, beispielsweise von Block-Aufbau zu statistischer Verteilung. Die zur Polymerstrukturmodifizierung einzusetzenden polaren Lösungsmittel werden bei der anionischen Polymerisation im Allgemeinen in Mengen von 0,1 bis 40 mol, bevorzugt 0,1 bis 10 mol, bezogen auf ein mol des eingesetzten Initiators eingesetzt.

Die Menge an einzusetzenden Lösungsmitteln kann in weiten Bereichen variieren. Sie beträgt üblicherweise etwa 300 bis 1500 Gew.-Teile pro 100 Gew.-Teile Gesamtmonomere.

Die Herstellung der erfindungsgemäßen gekoppelten und modifizierten Polymere erfolgt im wesentlichen in zwei Schritten. Beim ersten Schritt wird ein lebendes anionisches, Alkalimetall-terminiertes Polymer hergestellt, welches im zweiten Schritt mit den vorstehend definierten, erfindungsgemäßen funktionellen organischen Verbindungen verknüpft wird. Diese organischen Verbindungen können je nach den gewünschten Eigenschaften der herzustellenden Polymeren zu jedem beliebigen Zeitpunkt der Polymerisation zugegeben werden.

Der erste Schritt zur Herstellung der erfindungsgemäßen Polymere wird im Allgemeinen so durchgeführt, dass ein Alkalimetall-Initiatorsystem mit dem jeweiligen Monomer oder den Monomeren umgesetzt wird, um die lebenden anionischen Polymere zu bilden. Dieser Polymerisationsschritt lässt sich in einem Schritt oder in einer Abfolge von Schritten durchführen. Ist die polymere Kette ein Homopolymer oder ein statisches oder Blockcopolymer aus zwei oder mehr Monomeren, so werden die Monomere gleichzeitig mit dem Alkalimetall-Initiator polymerisiert. Ist die polymere Kette ein Blockcopolymer, das zwei oder mehr Homo- oder Copolymerblöcke umfasst, so lassen sich die einzelnen Blöcke in inkrementelle oder aufeinanderfolgende Monomerzugabe erzeugen.

Die beim ersten Schritt des Verfahrens zur Herstellung der erfindungsgemäß verknüpften Polymere verwendeten Alkalimetall-basierenden Initiatorsysteme beruhen auf Alkalimetall-Verbindungen der allgemeinen Formel R¹-M, worin R¹ ein Hydrocarbonyl-Rest mit 1 bis 20 Kohlenstoffatomen und M ein aus Lithium, Natrium, Kalium, Rubidium oder Cäsium ausgewähltes Alkalimetall ist. Beispiele für derartige Lithium-Starter sind Methyllithium, Isopropyllithium, n-Butyllithium, s-Butyllithium, Isobutyllithium, tert.-Butyllithium, tert.-Octyllithium, Hexyllithium, n-Undecyllithium, Phenyllithium, Naphthyllithium, p-Tolyllithium, 4-Phenylbutyllithium, Cyclohexyllithium und 4-Cyclohexylbutyllithium. Die Menge der eingesetzten Alkalimetallverbindungen richtet sich nach den gewünschten Eigenschaften des Polymers, insbesondere nach dem gewünschten Molekulargewicht. Die Alkalimetallverbindungen werden in Mengen von 0,2 bis 1,2 mmol, bevorzugt 0,3 bis 1,0 mmol, pro 100 g Gesamtpolymere eingesetzt.

Die Polymerisationsreaktion wird in Gegenwart der zuvor erwähnten inerten aprotischen Lösungsmittel, gegebenenfalls in Abmischung mit polaren Lösungsmitteln, durchgeführt.

Die Polymerisationstemperatur liegt im Allgemeinen bei 40 bis 130°C, bevorzugt bei 70 bis 110°C. Die Polymerisation wird bis zur quantitativen Umsetzung durchgeführt. Unter den erfindungsgemäßen Reaktionsbedingungen beträgt die Reaktionszeit bis zu 1 Stunde, bevorzugt bis 40 Minuten. Die Polymerisation kann sowohl bei Normaldruck als auch bei erhöhtem Druck (1 bis 10 bar) durchgeführt werden.

Zur Durchführung des zweiten Reaktionsschrittes (Verknüpfungsschritt) wird die bei der Polymerisation erhaltene Polymerisationsmischung mit den genannten funktionellen organischen Verbindungen, die als Kopplungsmittel dienen, vermischt, wobei es bevorzugt ist, die Kopplungsmittel in Form einer 10 bis 50 prozentigen, Lösung in Styrol, dem Reaktionsgemisch zuzugeben.

Bei der Kopplungsreaktion ist darauf zu achten, dass störende Verbindungen, die Kopplungsreaktion beeinträchtigen könnten, nicht vorhanden sind. Solche störenden Verbindungen sind z.B. Kohlendioxid, Sauerstoff, Wasser, Halogenide, Alkohole, organische und anorganische Säuren.

Die Kopplungsreaktion wird üblicherweise bei Temperaturen durchgeführt, die in etwa den Temperaturen der Polymerisationsreaktion entsprechen. Dies bedeutet, dass die Verknüpfungsreaktion bei Temperaturen von etwa 50 bis 120°C durchgeführt wird. Die Verknüpfungsreaktion kann ebenfalls bei Normaldruck sowie bei erhöhtem Druck (1 bis 10 bar) durchgeführt werden.

Die Reaktionszeit der Kopplungsreaktion ist relativ kurz. Sie liegt im Bereich von 10 bis 40 Minuten. Bevorzugterweise sollte die Polymerisation und die in situ nachfolgende Kopplungsreaktion nicht wesentlich mehr unter den gegebenen Reaktionsbedingungen als 60 Minuten dauern. Bei zu langer Reaktionszeit besteht die Gefahr von unerwünschten Nebenreaktionen und damit Bildung von Nebenprodukten.

Erfindungsgemäß werden etwa 0,1 bis 0,28 Mol, bevorzugt 0,12 bis 0,22 Mol an polyfunktionellen organischen Verbindungen pro Mol Alkalimetall-terminierten Polymeranionen für die Kopplungsreaktion eingesetzt.

Nach der Verknüpfungsreaktion werden die nunmehr gekoppelten und modifizierten Polymere gewonnen, indem man die Reaktionsmischung mit Abbruchreagenzien - wie oben erwähnt - behandelt, die aktiven Wasserstoff enthalten, wie Alkohole oder Wasser oder entsprechende Gemische. Darüber hinaus ist es von Vorteil, wenn der Reaktionsmischung Antioxidantien zugesetzt werden, bevor das verknüpfte Polymer isoliert wird.

Die Abtrennung des erfindungsgemäßen Polymeren erfolgt in üblicher Weise etwa durch Wasserdampfdestillation oder Ausflockung mit einem geeigneten Ausflockungsmittel, wie Alkoholen. Das ausgeflockte Polymer wird dann beispielsweise durch Zentrifugieren oder Extrudieren aus dem resultierenden Medium entfernt. Restliches Lösungsmittel und andere flüchtige Bestandteile lassen sich durch Erwärmen, gegebenenfalls unter vermindertem Druck oder in einem Gebläseluftstrom, aus dem isolierten Polymer entfernen.

Die Herstellung der erfindungsgemäßen Polymere kann sowohl in diskontinuierlicher als auch in kontinuierlicher Fahrweise erfolgen. Bevorzugt ist die diskontinuierliche Fahrweise in einem Reaktor.

Ein weiterer Gegenstand der vorliegenden Erfindung ist daher ein Verfahren zur Herstellung von verzweigten und gekoppelten Polymeren auf Basis von konjugierten Dienen oder von konjugierten Dienen und vinylaromatischen Verbindungen, in den zuvor beschriebenen physikalischen Parametern, das dadurch gekennzeichnet ist, dass man konjugierte Diene oder konjugierte Diene mit vinylaromatischen Verbindungen in Gegenwart von inerten organischen Lösungsmitteln und in Anwesenheit von organischen Alkalimetall-Verbindungen in üblicher Weise polymerisiert, die gebildeten alkali-metall-terminierten Polymeranionen mit organischen, polyfunktionellen Verbindungen, die mindestens 4 zur Kopplung fähigen Gruppen besitzen, umsetzt, wobei das molare Verhältnis von eingesetzten polyfunktionellen Verbindungen zu alkali-metall-terminierten Polymeranionen 0,1 bis 0,22 :1 beträgt.

Selbstverständlich können den erfindungsgemäßen Polymeren noch die üblichen Compoundierkomponenten, wie Füllstoffe, Farbstoff, Pigmente, Erweichungsmittel und Verstärkungsmittel, zugesetzt werden. Darüber hinaus die bekannten Kautschukhilfsmittel und Vernetzungsmittel, wie in "Handbuch für die Gummiindustrie", 2. Ausgabe, 1991, Herausgeber: Bayer AG, beschrieben. Darüber hinaus ist es ebenfalls möglich, in bekannter Weise die erfindungsgemäßen Polymeren mit bekannten Kautschuken abzumischen, um besondere Eigenschaftsprofile für die herzustellenden Kautschükformkörper zu erzielen.

Die erfindungsgemäßen gekoppelten und verzweigten Dien-Polymere können in bekannter Weise zur Herstellung von Vulkanisaten bzw. Kautschukformkörpern aller Art verwendet werden, insbesondere zur Herstellung von Reifen und Reifenbauteilen, wobei die Herstellung von Reifenlaufflächen ganz besonders bevorzugt ist.

### Beispiel 1

### a) Herstellung eines anionischen Lithium-tennininierten Styrol-Butadien-Copolymers:

In einem mit Stickstoff gespülten und mit einem Rührer versehenen Autoklaven wurden 8.500 g technisches Hexan vorgelegt. Danach wurde unter Rühren zu dem vorgelegten Hexan 46mmol tert.-Butoxy-ethoxy-ethan, 0,94 mmol Kalium-tert.-amylat und 9,06 mmol n-Butyllithium (Buli) gegeben. Zu diesem Gemisch wurde dann 1200 g getrocknetes, destabilisiertes 1,3-Butadien und 340 g getrocknetes, destabilisiertes Styrol zudosiert. Die Polymerisation der Monomere wurde bei einer Temperatur von 70°C bis zum quantitativen Umsatz des Monomers durchgeführt.

### b) Kopplung des gemäß a) hergestellten Copolymers

Das in a) erhaltene Polymer wurde direkt - in situ - mit 1,65 mmol 4,4-Methylen-bis-(NN-diglycidylanilin) versetzt und das Gemisch bei einer Temperatur von ca. 70°C etwa 30 Minuten gerührt. Danach wurde der Reaktorinhalt abgekühlt und die Reaktion mit Ethanol abgestoppt. Das erhaltene Produkt wurde anschließend mit Vulkanox® BHT stabilisiert und bei 60°C im Trockenschrank getrocknet. Molares Verhältnis von Kopplungsmittel zu Li-terminiertem Polymer: 0,18 mmol 4,4-Methylen-bis-(NN-diglycidylanilin)

Die angegebenen Molverhältnisse beziehen sich auf vollständige Kopplung.

### Beispiel 2

Die Herstellung des nicht gekoppelten und nicht modifizierten Styrol-Butadien-Copolymers erfolgte wie in Beispiel 1a) beschrieben.

Mengenangaben
a) n-Butyllithium: 11,3 mmol
b) tert.-Butoxy-ethoxy-ethan: 46mmol
c) Kalium-tert.-amylat: 0,94 mmol

Die anschließende Kopplung des hergestellten Copolymers erfolgte direkt - in situmit 2,06 mmol 4,4-Methylen-bis-(N,N diglycidylanilin). Die Reaktionszeiten der Kopplung sowie die Aufarbeitung der Polymere erfolgte wie unter 1b) beschrieben. Molares Verhältnis von Kopplungsmittel zu Li-terminiertem Polymer: 0,18 mol (Kopplungsmittel): 1 mol (Li-terminiertes Polymer).

Das angegebene Molverhältnis bezieht sich ebenfalls auf die vollständige Kopplung mit dem Polymer.

### Vergleichsbeispiel 1 (Molgewicht < 600000 g/mol):

Die Herstellung des nicht gekoppelten und nicht modifizierten Styrol-Butadien-Copolymers erfolgte wie in Beispiel 1a) beschrieben.

### Mengenangaben

a) n-Butyllithium: 17,6 mmol
b) tert.-Butoxy-ethoxy-ethan: 51mmol
c) Kalium-tert.-amylat: 0,94 mmol

Die anschließende Kopplung des hergestellten Copolymers erfolgte direkt - in situmit 3,21 mmol 4,4-Methylen-bis-(*N,N*-diglycidylanilin). Die Reaktionszeiten der Kopplung sowie die Aufarbeitung der Polymere erfolgte wie unter 1b) beschrieben. Molares Verhältnis von Kopplungsmittel zu Li-terminiertem Polymer: 0,18 mol (Kopplungsmittel): 1 mol (Li-terminiertes Polymer).

### Vergleichsbeispiel 2 (Überschuβ Kopplungsmittel):

Die Herstellung des nicht gekoppelten und nicht modifizierten Styrol-Butadien-Copolymers erfolgte wie in Beispiel 1a) beschrieben.

### Mengenangaben

a) n-Butyllithium: 15,27 mmol
b) tert.-Butoxy-ethoxy-ethan: 49mmol
c) Kalium-tert.-amylat: 0,94 mmol

Die anschließende Kopplung des hergestellten Copolymers erfolgte direkt - in situmit 11,47 mmol 4,4-Methylen-bis-(*N,N*-diglycidylanilin). Die Reaktionszeiten der Kopplung sowie die Aufarbeitung der Polymere erfolgte wie unter 1b) beschrieben. Molares Verhältnis von Kopplungsmittel zu Li-terminiertem Polymer: 0,73 mol (Kopplungsmittel): 1 mol (Li-terminiertes Polymer).

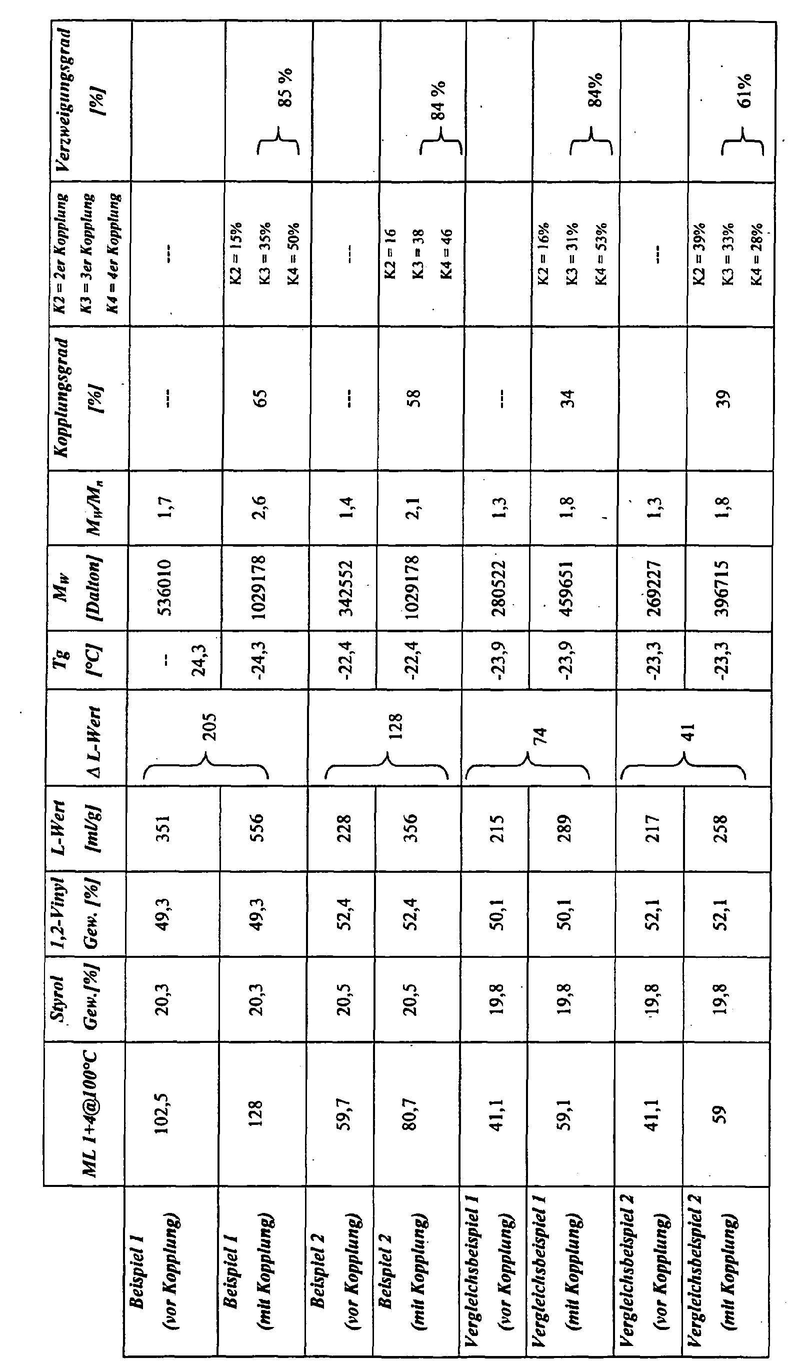

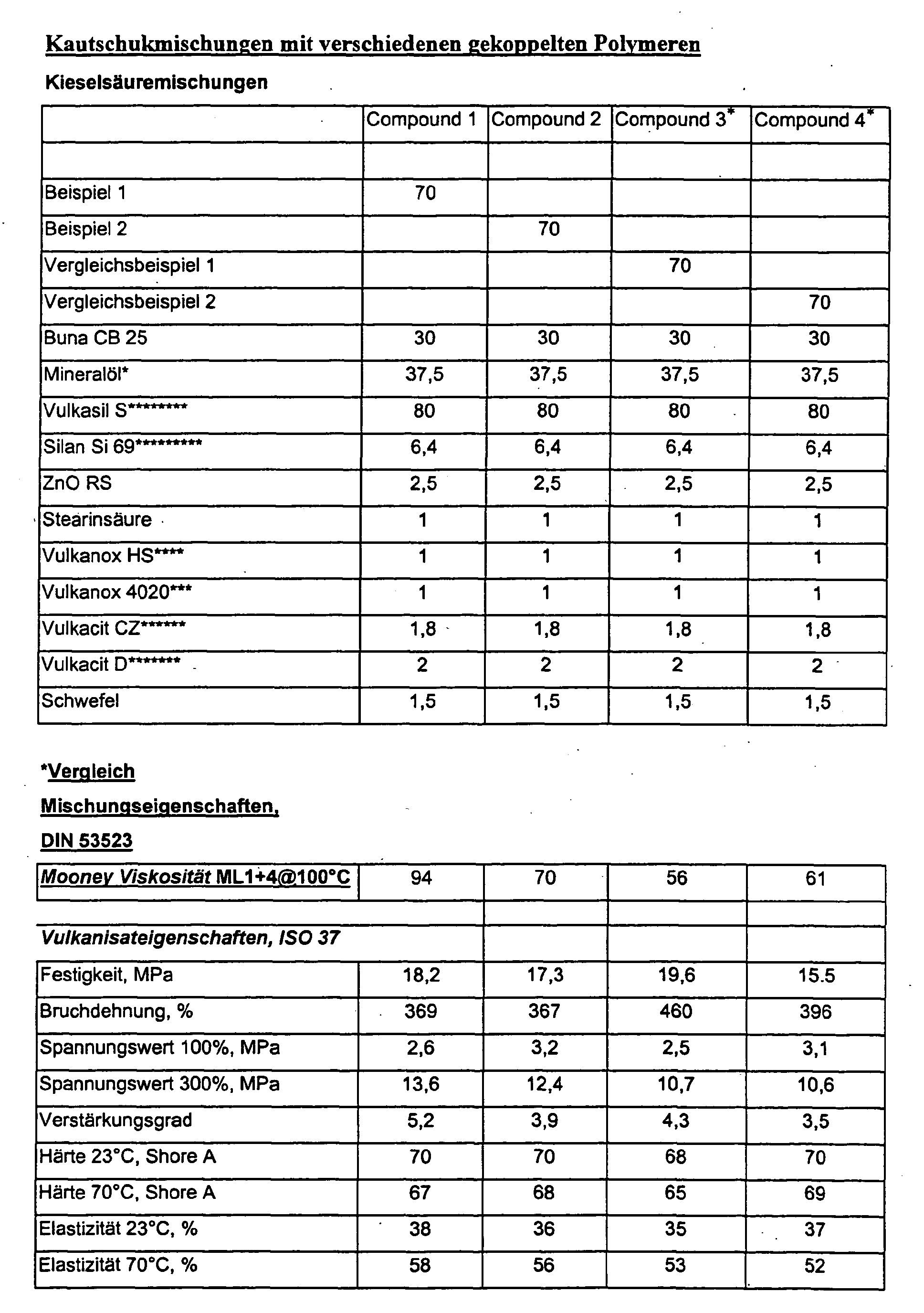

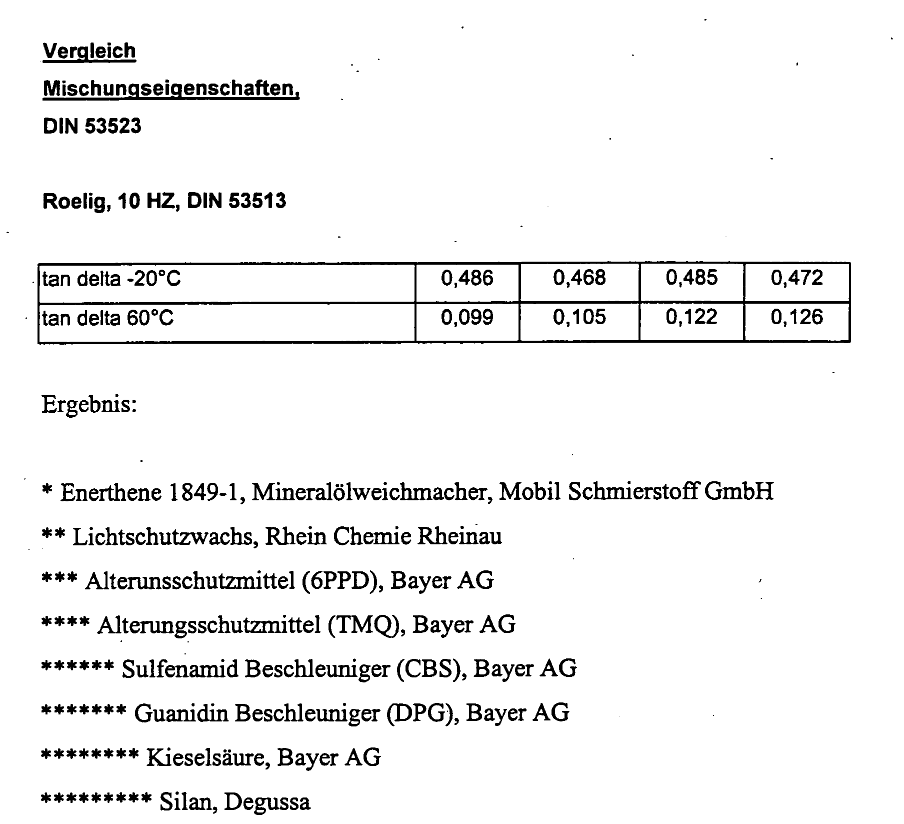

- ML @100°C: Mooneywerte gemessen bei 100°C
- GPC:: Gelpermeationschromatographie
- M_{w}:: mittleres Molekulargewicht
- M_{w}/Mₙ:: Polydispersität
- L-Wert:: Viskosität einer Lösung von 0,5 g Polymer / 100ml Toluol (25°C, Ubblelohde-Viskosimeter)
- Δ L-Wert:: Differenz der L-Werte vor der Kopplung und mit Kopplung
- Tg:: Glastemperatur
- Kopplungsgrad:: Anzahl der gekoppelten Polymerketten bezogen auf die Gesamtheit der Polymerketten
- Verzweigungsgrad:: bezogen auf den Kopplungsgrad, beschreibt der Verzweigungsgrad die prozentuale Summe der Verzweigungen > 2er Kopplung (berechnet über die Monomerkonzentration)

### Bestimmung des Kopplungs- und Verzweigungsgrades

Zur Abschätzung des Kopplungsgrades und des Verzweigungsgrades wurden GPC Messungen verwendet. Zur Bestimmung des Kopplungsgrades wird aus den GPC Messungen der Anteil der Monomere bestimmt, der in ungekoppelten Ketten vorliegt. Dies entspricht bei gekoppelten Systemen dem Peakmaximum beim kleinsten Molekulargewicht der GPC Messungen. Der Kopplungsgrad wird aus dem Verhältnis der Summe der Peakmaxima bei m -fachen Molekulargewicht ( m = 2, 3, 4, ...) und der Summe aller Monomere (kann aus der Summe aller Peakmaxima abgeschätzt werden) berechnet.

Das Verhältnis der Summe der m -fachen Molekulargewichte (m = 2, 3, 4....) und der Summe der m -fachen Molekulargewichte (m = 3, 4, ...) wird als Verzweigungsgrad bezeichnet.

## Patentansprüche

1. Verzweigte und gekoppelte Polymere auf Basis von konjugierten Dienen oder von konjugierten Dienen und vinylaromatischen Verbindungen sowie von polyfunktionellen, organischen Verbindungen mit mindestens 4 zur Kopplung fähigen Gruppen, wobei die Polymeren ein Molekulargewichtsverhältnis (M_{w}/Mₙ) von 1,0 bis 3,0, ein Gewichtsmittel des Molekulargewichts (M_{w}) von 400 000 bis 2 000 000, eine Glasübergangstemperatur (T_{G}) von -50 bis - 10°C, eine Menge an 1,2-Vinylgruppen von 40 bis 80 %, bezogen auf die im Polymeren vorhandenen Dien-Einheiten, einen Kopplungsgrad von mindestens 45 % aufweisen, wobei mindestens 60 % der gekoppelten Polymere einen Verzweigungsgrad von größer als zwei haben, mit der Maßgabe, dass die Gewichtsmenge an Polymeren mit 4- und mehr als 4-facher Verzweigung, bezogen auf 100 g Polymer, stets größer ist als die Gewichtsmenge an Polymeren mit 3-facher Verzweigung, und wobei die Differenz der Lösungsviskosität vor und nach der Kopplung bei den Polymeren im Bereich von 100 bis 400 (gemessen mit einer Lösung von 0,5 g Polymer in 100 ml Toluol, bestimmt bei 25°C mit einem Ubbelohde-Viskosimeter) liegt.

2. Verzweigte und gekoppelte Polymere nach Anspruch 1, **dadurch gekennzeichnet, dass** das Molekulargewichtsverhältnis (M_{w}/Mₙ) 1,5 bis 2,8, das Gewichtsmittel des Molekulargewichts (M_{w}) 600 000 bis 1 400 000, die Glasübergangstemperatur (T_{G}) -40 bis -15°C, die Menge an 1,2-Vinylgruppen 50 bis 70 % und der Kopplungsgrad 48 bis 80 % beträgt, darüberhinaus 70 bis 95 % der gekoppelten Polymere einen Verzweigungsgrad größer zwei haben, die Differenz der Lösungsviskosität vor und nach der Kopplung 140 bis 300 beträgt und die Gewichtsmenge an Polymeren mit 4-und mehr als 4-facher Verzweigung um 10-50 % größer ist als die Menge an Polymeren mit 3-facher Verzweigung.

3. Verfahren zur Herstellung der Polymere nach Anspruch. 1, **dadurch gekennzeichnet, dass** man konjugierte Diene oder konjugierte Diene mit vinylaromatischen Verbindungen in Gegenwart von inerten organischen Lösungsmitteln und in Anwesenheit von organischen Alkalimetall-Verbindungen in üblicher Weise polymerisiert, die gebildeten alkali-metall-terminierten Polymeranionen mit organischen, polyfunktionellen Verbindungen, die mindestens 4 zur Kopplung fähigen Gruppen besitzen, umsetzt, wobei das molare Verhältnis von eingesetzten polyfunktionellen Verbindungen zu alkali-metall-terminierten Polymeranionen 0,1 bis 0,28:1 beträgt.

4. Verwendung der Polymere nach Anspruch 1 für die Herstellung von Vulkanisaten oder Kautschukformkörpern aller Art, insbesondere zur Herstellung von Reifen und Reifenbauteilen.
